# EUROPÄISCHE PATENTSCHRIFT

(11) **EP 1 687 093 B1**
(45) Veröffentlichungstag und Bekanntmachung des Hinweises auf die Patenterteilung: **31.10.2007**
(21) Anmeldenummer: 04802732.0
(22) Anmeldetag: 13.11.2004
(51) Int. Cl.: B03B 9/06, B03B 7/00, B03B 5/62, B03B 9/00

(54) **VERFAHREN UND VORRICHTUNG ZUR NASSMECHANISCHEN BEHANDLUNG EINES STOFFGEMISCHES, INSBESONDERE VON ABFALL JEDER ART**
METHOD AND DEVICE FOR THE WET-MECHANICAL TREATMENT OF A SUBSTANCE MIXTURE, PARTICULARLY OF REFUSE OF ALL TYPES
PROCEDE ET DISPOSITIF DE TRAITEMENT PAR VOIE HUMIDE ET MECANIQUE D'UN MELANGE DE SUBSTANCES, EN PARTICULIER DE DECHETS DE TOUS TYPES

(30) Priorität: 22.11.2003 DE 10354627
(43) Veröffentlichungstag der Anmeldung: 09.08.2006
(73) Patentinhaber: EcoEnergy Gesellschaft für Energie- und Umwelttechnik mbH, 37449 Walkenried (DE)
(72) Erfinder: SCHU, Reinhard, 37445 Walkenried (DE)
(74) Vertreter: Vomberg, Friedhelm
(86) Internationale Anmeldenummer: PCT/DE2004/002518
(87) Internationale Veröffentlichungsnummer: WO 2005/051547

(56) Entgegenhaltungen:
- DE-A1- 2 406 404
- DE-A1- 3 908 185
- DE-A1- 19 617 501

## Beschreibung

Die Entsorgung von Siedlungsabfällen sowie gewerblichen Abfällen stellt hinsichtlich der von der Politik immer stärker geforderten Nachhaltigkeit ein Problem dar. Nach der Reduzierung der Abfallmengen durch Abfallvermeidung und der Einführung der separaten Wertstofferfassung verbleiben Abfälle, die direkt keiner Verwertung zugeführt werden können. Als Dreistoffgemisch aus Inertstoffen, Organik und Wasser können sie wegen eines zu hohen Anteils an Organik oder eines zu hohen Anteils an Wasser- und /oder Mineralien weder einer Mineralstoffverwertung, noch einer Biomasseverwertung zugeführt werden. Aufgrund einer zu hohen Schadstoffbelastung ist eine Ableitung als Abwasser ebenfalls nicht möglich.
Für die Entsorgung dieser Abfälle schreiben mittelfristig die neuen gesetzlichen Regelungen in Deutschland (Abfallablagerungsverordnung) eine Inertisierung vor der Deponierung vor. Langfristig (bis 2020) soll.eine vollständige Verwertung aller Abfälle entsprechend einer nachhaltigen Abfallwirtschaft erfolgen.
Für die Verwertung stehen verschiedene Verfahren bzw. Verwertungswege zur Verfügung. So findet eine energetische Verwertung bei der Vergärung, der Verbrennung oder der Vergasung statt. Ein wichtiges Kriterium für die Produktqualität bei allen energetischen Verwertungsverfahren ist ein geringer Mineralstoff-bzw. Inertstoffanteil. Unterschiedlich ist die optimale Produktfeuchtigkeit und Korngröße zu bewerten. Für die Vergärung stehen zudem Trocken- und Nassvergärungsverfahren sowie anaerobe Abwasserreinigungsverfahren zur Verfügung.
Für eine stoffliche Verwertung der organischen Anteile steht die landwirtschaftliche Verwertung im Vordergrund, die jedoch durch die Schadstofffracht des Materials limitiert ist. Werkstoffliche Verwertungsformen der Faseranteile als Dämmstoffe, Papier oder Pressplatten werden hier nur am Rande betrachtet.
Für die Inertstoffe ergeben sich Verwertungswege in der Bauindustrie oder sie gelangen zur Ablagerung auf Deponien.
Erst eine Trennung des Abfalls in stofflich und/oder energetisch verwertbare Fraktionen ermöglicht jedoch eine effektive Verwertung. Dabei sollte auch die Trennung als Vorbehandlung zur eigentlichen Verwertung den Ansprüchen der Nachhaltigkeit genügen, d.h. Ressourcen schonen und Immissionen vermeiden bei gleichzeitiger wirtschaftlicher und sozialer Verträglichkeit.

Derzeit stehen für die Behandlung von Abfällen mit organischen Fraktionen nachfolgend beschriebene Verfahren zur Verfügung, die sich im Schadstoffgehalt der organischen Fraktionen unterscheiden:
- Behandlung von Reststoffen mit unbelasteter organischer Fraktion:
   Kompostierung:
      Feste organische Reststoffe bzw. Schlämme mit Zugabe von Strukturmaterial werden nach Absiebung von groben Störstoffen aerob biologisch behandelt. Durch die biologische Behandlung werden organische Substanzen soweit ab- und umgebaut und der Wassergehalt gesenkt, dass eine Stabilisierung erzielt wird. Durch diesen Prozess wird die Pflanzenverfügbarkeit reduziert und gleichzeitig die Pflanzenverträglichkeit des Kompostes erhöht. Störstoffe werden neben der Grobaufbereitung vorrangig aus dem durch den Kompostierungsprozess getrockneten Fertigkompost durch Hartstoffabscheidung und Windsichtung separiert. Die Hartstoffabscheidung wird meist mit Luftherden ausgeführt. Die Kompostierung von organischen Reststoffen ist mit hohen Abluftemissionen und hohem Energieverbrauch verbunden.
   Vergärung:
      Bei der anaeroben biologischen Behandlung werden, speziell bei Nassvergärungsverfahren, Inertstoffe (Sand) vor der Vergärung abgeschieden. Eine Nachrotte zur biologischen Trocknung des entwässerten Gärrestes mit oder ohne Strukturmaterialzugabe wird bei den meisten Vergärungsverfahren vor der landwirtschaftlichen Verwertung durchgeführt. Kennzeichnend für eine Vergärung ist die Erzeugung von regenerativer Energie aus Biogas und die Reduzierung der Abluftemissionen gegenüber einer Kompostierung. Folgende verfahrenstechnische Vergärungsvarianten sind im großtechnischen Maßstab realisiert worden:
         Ein- und mehrstufige Trockenvergärung bei 20 % - 50 % Trockensubstanzgehalt: Aus den Firmenprospekten und realisierten Anlagen sind unter anderem die Trockenvergärungsverfahren Valorga, der Firma Valorga, Frankreich; das Dranco Verfahren, Firma Organic Waste Systems nv, Belgien; die Trockenvergärung Linde-BRV, Schweiz und das Kompogas-Verfahren, Firma Kompogas, Schweiz bekannt. Wesentlich bei diesen Verfahren ist, dass eine Abscheidung von Inertstoffen meist nicht oder erst nach der Vergärung durchgeführt wird. Nach der WO 98/38145 A1, Frank Rindelaub, Schweiz ist bei einem Trockenvergärungsverfahren eine vorhergehende Inertstoffabscheidung einer Teilfraktion vorgesehen. In der Anlage La Coruna, Spanien, die nach dem sog. Valorga Verfahren arbeitet, wird zum Schutz der Vergärungsanlage in der mechanischen Aufbereitung eine trockene Inertstoffabscheidung vor der Vergärung durchgeführt.
         Ein- und mehrstufige Nassvergärung bei 5 % - 20 % Trockensubstanzgehalt: Nassvergärungsverfahren für Abfälle mit vorgeschalteter Inertstoffabscheidung sind aus Firmenprospekten unter anderem bekannt von den Firmen Linde-KCA-Dresden GmbH, Dresden, Deutschland; MAT Müll- und Abfalltechnik GmbH, München, Deutschland; Avecon, Finnland sowie WABlO-Verfahren der Firma EcoTec, Finnland.
            Neben der Vergärung ist bei diesen Verfahren die Inertstoffabscheidung, also die Vorbehandlung der organischen Fraktion vor der Vergärung entscheidend.
- Behandlung von Reststoffen mit belasteter organischer Fraktion:
   Die meisten bekannten Verfahren zur Behandlung belasteter organischer Fraktionen sehen eine Beseitigung in einer Deponie oder einer Müllverbrennungsanlage vor. In Europa ist nach aktueller Rechtslage eine Stabilisierung der organischen Fraktion vor der Deponierung vorzusehen. Diese Vorbehandlung vor der Deponierung wird in mechanisch-biologischen Aufbereitungsanlagen durch Kompostierungs- und Vergärungsverfahren erreicht.
   Wird eine energetische Verwertung angestrebt, ist eine Trocknung und Inertstoff abscheidung der meist feuchten und inertstoffhaltigen Abfälle erforderlich. Inertstoffabscheidungsverfahren können nass- oder trockenmechanisch durchgeführt werden. Dabei hat die nasse Abscheidung, bei der Wasser als Trennmedium verwendet wird, physikalisch bedingt, einen höheren Wirkungsgrad als die trockene Abscheidung, bei der Luft das Trennmedium darstellt.
   Trockenmechanische Inertstoffabscheidungsverfahren nach einer biologischen Trocknung sind aus dem Trockenstabilat-Verfahren der Firma HerHof Umwelttechnik GmbH, Solms-Niederbiel, Deutschland und der DE 196 49 901 A1, bekannt. Vorrichtungen und Verfahren für die nassmechanische Inertstoffabscheidung sind bekannt aus den Druckschriften DE 196 23 027 C1, DE 198 44 006 A1, DE 199 24 164 A1, DE 201 12 681 U1, DE 42 43 171 C1, DE 197 29 802 C2, DE 44 36 639 A1, DE 198 46 336 A1, DE 197 45 896 A1, DE 44 15 858 A1, DE 43 12 005 A1, DE 199 23 108 A1 und DE 41 20 808 A1. Darüber hinaus bestehen spezielle Verfahren zur Aufbereitung von Hafenschlick und Straßenkehricht wie z.B. die Anlage ASRA in Hamburg Stellingen der Firma Kupczik Umwelttechnik GmbH Hamburg und das MoReSa Verfahren von AKW Apparate und Verfahren GmbH, Hirschau, DE 196 17 501 C2. Diese Druckschrift offenbart verschiedene Merkmale der unabhängigen Ansprüche 1 und 10 der vorliegenden Erfindung.

Ziel der meisten vorgenannten Verfahren ist die Inertstoffabscheidung. Zu diesem Zweck wird der zu trennende Abfall erst zerkleinert und gemischt, schließlich werden aus dem Gesamtstrom die Inertstoffe oft in nur einem Behandlungsschritt herausgeholt. Dies hat wiederholt zu großen Problemen in den nachfolgenden Aggregaten geführt.

Durch eine weitgehende Zerkleinerung bis hin zur Zerfaserung, z.B. durch den Einsatz eines Pulpers wie in den Druckschriften DE 41 20 808 A1, DE 199 23 108 A1, DE 198 29 648 C2, DE 198 00 224 C1, DE 196 55 101 A1, DE 100 12 530 A1, DE 39 34 478, DE 198 07 116 A1, DE 4042 226 A1, DE 4042 225 A1, DE 4406 315 C2 oder einer vorhergehenden Kaskadenkugelmühle wie in Dokument DE 102 10 467 A1 und DE 41 26 330 A1 erhöht sich die Viskosität der Suspension, was einer effektiven Trennung entgegenwirkt. Die Viskosität sinkt durch den Abbau von Organik erst während der nachfolgenden Vergärung, so dass es hier zu unerwünschten und betriebsstörenden Sedimentationen von Inertstoffen kommt, die in der vorgeschalteten Abscheidung aufgrund der vorher erhöhten Viskosität nicht erfasst wurden.

Andere nassmechanische Trennverfahren mit geringerer Zerkleinerungsintensität vor der Stofftrennung - siehe EP 0521 685 A2 und DE 197 55 223 A1, EP 567 184 B1 - führen die Inertstoffabscheidung in einer Trennstufe und nach der DE 197 55 223 A1 sogar unter Rühren durch, wodurch eine sehr ungenaue Trennung erfolgt.

In der EP 0639 108 B1 wird ein Satzbetrieb mit den entsprechenden Durchsatzbeschränkungen vorgeschlagen, der auch in verschiedenen Großanlagen ausgeführt wurde. Durch das Fehlen einer gezielten Sandausschleusung, z.B. in einer weiteren Trennstufe, kam es zu erheblichen Sedimentationsproblemen in den nachfolgenden Verarbeitungsschritten.

Perkolationsverfahren wie in DE 198 46 336 A1, DE 196 48 731.A1, DE 199 09 353 A1, DE 199 09 328 A1 und DE 198 33 624 A1 schleusen nur feine Inertstoffe, die mit dem Waschwasser oder Perkolat ausgewaschen werden, vor oder während der Perkolation aus. Grobe Inertstoffe wie Steine, Glas und Steingutscherben, die bei Siedlungsabfällen den größten Inertstoffanteil darstellen, werden in die Perkolation eingetragen und führen dort zu einem erhöhten Energieverbrauch und Verschleiß.

Bei allen vorgenannten Verfahren zur hertstoffabscheidung, insbesondere bei den Nassvergärungsverfahren, steht der Anlagenschutz und nicht die Verbesserung der Materialqualität zur späteren Verwertung im Vordergrund. Die Trennung von Abfällen sollte jedoch neben den technischen und wirtschaftlichen Anforderungen an die Anlagentechnik auch die optimale Verwertung der Teilfraktionen sicherstellen.

Zwar ist die Behandlung des größten Anteils der Organik bei allen vorgenannten Verfahren zwingend vorgesehen, so dass diese direkt einer anaeroben Behandlung oder einer vorhergehenden Hydrolyse mit anschließender anaeroben Behandlung der Hydrolysate zugeführt wird. Dabei wird jedoch nicht berücksichtigt, dass der energetische Wirkungsgrad einer Vergärung gegenüber einer Verbrennung von dem Parameter anaerobe Abbaubarkeit und dem Parameter Trockensubstanz abhängt. Die Verbrennung von trockenem Holz hat einen höheren energetischen Wirkungsgrad als die Vergärung von trockenem Holz. Es ist jedoch einsichtig, dass die Vergärung von nassen organischen Gewerbeabfällen mit hohen Biogasausbeuten einen höheren energetischen Wirkungsgrad aufweist, als die Verbrennung dieser nassen Fraktion.

Organik, die weitestgehend von Inertstoffen und löslicher Organik befreit ist und mittels einfacher Schneckenpressen auf Trockensubstanzgehalte > 45 % TS entwässert werden kann, hat einen Heizwert von ca. 6.000 kJ/kg und liegt damit an der Grenze einer selbstgängigen Verbrennung. Liegt der Anteil anaerob abbaubarer Organik unter 50 %, wie z.B. bei Rechengut, ist aus wirtschaftlicher Sicht für diesen Stoffstrom die energetische Verwertung durch thermische Prozesse wie Verbrennung oder Vergasung, mit oder ohne vorhergehende Trocknung, einer anaeroben Behandlung durch Vergärung vorzuziehen.

Diese Problemstellung wird in Ansätzen in der EP 0037 612 B1 und der DE 196 00 711 A1 erwähnt. Im Letzteren wird die leichtabbaubare Organik durch Waschung des Abfalls in einer Waschschnecke herausgelöst. Leicht abbaubare Organik wird im Kreislaufwasser, das einer anaeroben Behandlung zugeführt wird, konzentriert. Problematisch bleiben aber auch hier die Verweilzeiten von 2 - 8 Stunden (in der DE 198 46 336 A1 werden 2- 6 Stunden erwähnt) zur Waschung der leichtabbaubaren Organik. In der praktischen Anwendung hat sich jedoch gezeigt, dass vorrangig eine intensive Waschung mit Kreislaufwasser, und nicht eine hohe Verweilzeit für eine hohe Löserate von leichtabbaubarer Organik verantwortlich ist, wie in dem Hersteller- und Dienstleisterkatalog 1997/98, 9. Kasseler Abfallforum, M.I.C. Baeza-Verlag, Seite 12 beschrieben ist.
Die Erhöhung der Verweilzeit setzt den Abfall lediglich einer längeren mechanischen Beanspruchung bzw. einer Lösung aus. Die Hydrolyse, eine spezielle basen-, oder säurekatalysierte chemische oder enzymatische Spaltung von Molekülen unter Einbindung von Wasser, spielt bei diesem Verfahren eine untergeordnete Rolle, wirksam ist vielmehr die Lösung durch Wasser als Lösungsmittel.

Erst spät hat sich die Erkenntnis durchgesetzt, dass eine hinreichende Hydrolyse der organischen Fraktion des Abfalls bereits in den Abfallbehältern, bei der Einsammlung und Abfalllagerung bis zur Verarbeitung erfolgt. Es vergehen nicht selten 2-4 Wochen von der Abfallentstehung bis zur Verarbeitung, in denen eine Hydrolyse natürlich abläuft. Eine technische Umsetzung dieser Erkenntnis ist aus dem Stand der Technik nicht bekannt.

Gegenüber den vorgenannten Verfahren zur Behandlung von Abfällen hat sich die vorliegende Erfindung der Aufgabe gestellt, stofflich und/oder energetisch verwertbare Fraktionen zu erzeugen und dies unter weitgehender Vermeidung der Deponierung und einer Optimierung des Abscheidungsprozesses in Bezug auf Durchsatzleistung, Energieverbrauch, Verschleiß, Investitionskosten und flexibler Weiterverarbeitung der erzeugten Fraktionen.

Zur Lösung dieser Aufgabe wird das Verfahren nach Anspruch 1 sowie die Vorrichtung zur Durchführung dieses Verfahrens nach Anspruch 35 vorgeschlagen.

In dem erfindungsgemäßen Verfahren wird ein Dreistoffgemisch bestehend aus Wasser, Inertstoffen und Organik in einer dreistufigen Trennanlage in drei Inertstofffraktionen und drei Organikfraktionen, sowie eine Flüssigfraktion, die gelöste Stoffe sowie feinste Inertstoffe und feine Organikpartikel enthält, aufgetrennt.

Die Inertstoffe werden je nach wirtschaftlichen und lokalen Gegebenheiten soweit mit Kreislaufwasser und Frischwasser gereinigt, dass sie einer Verwertung zugeführt werden können. Speziell bei der Grobfraktion der Inertstoffe ist eine stoffliche Verwertung je nach nationaler Gesetzgebung fraglich. Diese Fraktion kann entweder direkt oder nach einer kurzen Alterungsphase zur Stabilisierung deponiert werden oder in einer weitergehenden Aufbereitung bis zur Verwertungsqualität aufbereitet werden. Die abgeschiedenen Organikfraktionen können entweder direkt einer Trocknung, einer Kompostierung oder einer Vergärung zugeführt werden.

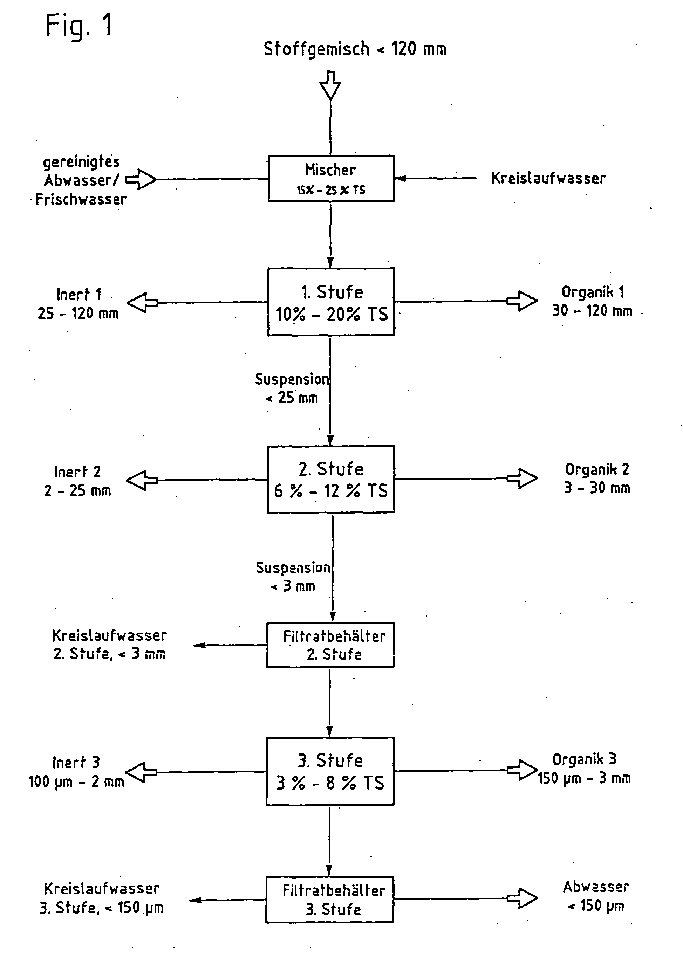

Bei dem erfindungsgemäßen Verfahren (siehe Fig. 1) werden, beginnend bei einem sehr hohen Trockensubstanzgehalt, in mehreren Stufen Inertstoffe abgeschieden. Nachdem die groben Steine (Inert 1, Fig. 1) separiert sind, kann die grobe Organik (Organik 1, Fig. 1), die dann entsprechend frei von den Steinen der entsprechenden Siebgröße ist, abgesiebt und danach, da es sich um grobe Organik handelt, leicht mit geringen Wassermengen von Sand und von anhaftender feiner Organik freigespült werden.
Die rechengutähnliche Fraktion (Organik 1) kann dann mit einfachen Presstechniken bei geringem Verschleiß auf hohe Trockensubstanzgehalte abgepresst werden.
Dies wird erreicht durch die Abwaschung von aller feinen Organik, die nur sehr schwer abzupressen ist, und aufgrund der Auswaschung des Steingerüstes bzw. des Gerüstes aus Inertstoffen, welches sonst vorrangig die Presskraft aufnimmt ohne dabei zu einer großen Entwässerung beizutragen. Zur Verbesserung der Lösung von leicht biologisch abbaubarer Organik kann vor der Abpressung eine Zerkleinerung mit dem Ziel der Entsaftung durchgeführt werden.

Dieser erste Schritt ist der wichtigste Schritt des gesamten Verfahrens. Durch die hohe Abpressung der groben Organik (Organik 1) wird schon in diesem Verfahrensschritt das strukturreiche Material zur energetischen Verwertung durch Verbrennung oder Vergasung von der vergärbaren Organik, die sich im Presswasser befindet, abgetrennt.
Bei entsprechender Pressung ist in einer ersten Pressstufe mit normalen Schneckenpressen mit einem Entwässerungsgrad von ca. 45 % - 60 % Trockensubstanzgehalt zu rechnen.
In einer 2. Presstufe kann dieses Material (Organik 1) auf 60 % - 75 % Trockensubstanzgehalt abgepresst werden.

Die organische Fraktion (Organik 1) kann nach der erfindungsgemäßen Vorbehandlung direkt oder nach einer Trocknung durch Verbrennung oder Vergasung energetisch verwertet werden.
Darüber hinaus kann die Organik 1 bei Einhaltung der entsprechenden Grenzwerte zur stofflichen Verwertung in der Landwirtschaft eingesetzt werden. Dazu ist von Bedeutung, dass neben der Inertstoffabscheidung und einer entsprechend hohen Abpressung das Rechengut einer batchweisen Trocknung unterzogen wird. Dabei sollte die Trocknung so durchgeführt werden, dass eine Hygienisierung durch entsprechende Temperaturführung der Trocknung erzielt wird. Nach der Trocknung sollte das Material von Störstoffen, entsprechend einer Kompostfeinaufbereitung, befreit und pelletiert werden, damit eine gute Lagerfähigkeit, Transportfähigkeit und Pflanzenverträglichkeit des später als Trockendüngerpellets einzusetzenden Materials gegeben ist.

Nachdem die groben Steine (Inert 1) und die grobe Organik (Organik 1) von der Materialsuspension abgeschieden sind, hat sich der Trockensubstanzgehalt der verbleibenden Suspension stark reduziert. Diese Reduzierung ist verursacht durch das Abschöpfen von Trockensubstanz mit hohem Trockensubstanzgehalt wie z. B. der Steine mit einem Trockensubstanzgehalt > 90 % und der abgepressten Organik mit einem Trockensubstanzgehalt von > 45 %. Des Weiteren wird zur Spülung der Inertstoffe und zur Spülung der Organik zusätzliches Wasser eingesetzt, das zu einer weiteren Reduzierung des Trockensubstanzgehaltes führt. Aus der verbleibenden Suspension werden in der 2. und 3. Stufe des Verfahrens weitere Inertstoffe abgeschieden.
In der 2. Stufe wird grober und feiner Sand in der Korngrößen von ca. 2-25 mm (Inert 2, Fig. 1) abgeschieden. In dem darauffolgenden Schritt kann über ein feines Sieb, dessen Maschenweite größer ist als die maximal abzuscheidende Inertstoffgröße von ca. > 3 mm, die organische Fraktion abgesiebt werden (Organik 2, Fig. 1). Die abgesiebte organische Fraktion (Organik 2) wird ebenfalls mit Wasser nachgewaschen und abgepresst. Der Sand (Inert 2), der in dieser Stufe abgeschieden wird, wird über einen Sandabscheider ausgetragen, mit Kreislaufwasser nachgespült und mit klarem Wasser nachgewaschen, so dass entsprechend dem Frischwassereinsatz entweder eine deponiefähige Inertstoff- Fraktion oder eine verwertbare Sandfraktion entsteht.
Es folgt zuletzt die 3. Stufe des Verfahrens, in der nun zum ersten Mal eine Pumpe in dem gesamten Verfahrensablauf eingesetzt wird.
Bedingt durch das Abschöpfen der verschiedenen Inert- und Organikfraktionen, die weitestgehend trocken abgeschieden werden, sowie durch die insgesamt zugeführten Kreislauf- bzw. Frischwassermengen, ist die bei ca. 3 mm gesiebte Suspension nun soweit im Wassergehalt gestiegen, dass sie zusammen mit der Korngröße < 3 mm und dem Trockensubstanzgehalt zwischen 3 - 8 % ideal für einen nachfolgenden klassierenden Hydrozyklon geeignet ist.
Der Überlauf des Hydrozyklons enthält die restlichen Feinbestandteile der Organik, die von Feinmineralien befreit sind. Der Unterlauf des Hydrozyklons enthält die abgeschiedenen Inertstoffe, die aber aufgrund ihrer Feinheit noch teilweise mit anhaftender Organik kontaminiert sind. Diese Feinmineralik kann mittels einer weiteren Aufbereitung, wie z. B. durch eine Sortierspirale oder Feinsiebung mit Waschung, auf verwertbare Qualitäten (Inert 3, Fig. 1) gebracht werden. Die organische Fraktion des Siebüberlaufs wird einer Feinsiebung bei ca. 50-500 µm zugeführt. Der bei der Feinsiebung entstehende Filterkuchen (Organik 3, Fig. 1) kann ebenfalls abgepresst werden. Zusätzlich zu den insgesamt 6 Fraktionen entsteht ein Kreislaufwasser, das mit gelöster Organik durch die verschiedenen Pressungen und Waschungen angereichert ist.
Damit ist ein großer Teil der vergärbaren Organik in das Kreislaufwasser überführt worden, während der schlechter vergärbare, strukturreiche Anteil in der abgepressten Fraktion enthalten ist. Das Kreislaufwasser sollte nun zur Reduzierung der Viskosität durch ein biologisches Verfahren konditioniert werden. Würde das Kreislaufwasser nicht behandelt, könnte die Viskosität soweit ansteigen, dass das Kreislaufwasser nicht mehr als Trennmedium der Inertstoffabscheidung verwendbar ist. Für die Behandlung des Kreislaufwassers stehen nun anaerobe Abwasserreinigungsverfahren, wie das Festbettvergärungsverfahren bzw. das Submersvergärungsverfahren mit Biomasserückhaltung zur Verfügung.
Darüber hinaus ist eine gemeinsame Vergärung des Kreislaufwassers und der Organikfraktionen mit Trocken-, Nassvergärungsverfahren für feststoffhaltige Suspensionen oder Perkolationsverfahren möglich.

Eine bessere Löslichkeit der Organik in das Kreislaufwasser kann durch eine thermische Konditionierung bei Aufheizung der Suspension auf ca.70 °C erzeugt werden. Gleichzeitig ist jedoch zu beobachten, dass das Presswasser durch die thermische Konditionierung einen höheren CSB und eine höhere Schwermetallrückfracht enthält. Dieser Effekt wird mit der vorliegenden Erfindung genutzt, so dass die abgepresste Organik, die nicht in die Vergärung gelangt, dekontaminiert wird, während die Belastung durch eine thermische Konditionierung gezielt der Flüssigphase zugeführt werden kann.

So wird die kontaminierte Organik durch einen hohen vergärbaren Anteil der gelösten Organik stark reduziert und gleichzeitig werden die Schwermetalle durch eine Komplexbildung der Organik während der Vergärung in der Vergärung ausgefällt. Die Schadstoffbelastung ist dann vorrangig im Gärrest wiederzufinden. Die Organik nach der Vergärung, bei einer reinen Kreislaufwasservergärung, ist somit die Schadstoffsenke des Verfahrens.

Die stoffliche Verwertung der organischen Fraktionen wird vorrangig in der Landwirtschaft als Düngemittel und/ oder Bodenverbesserer eingesetzt. Die Organik wird dazu entweder in Kompostierungsanlagen kompostiert oder in Vergärungsanlagen vergoren und kompostiert oder getrocknet sowie pelletiert und als lose Kompostschüttung oder als Düngepellets eingesetzt. Bei der energetischen Verwertung wird die Organik weitestgehend mechanisch entwässert, gegebenenfalls getrocknet und pelletiert und in Vergasungs- oder Verbrennungsanlagen verwertet. Für beide Verwertungswege ist eine Vorbehandlung mit dem erfindungsgemäßen Verfahren vorteilhaft.

Das erfindungsgemäße Verfahren kann in Verbindung mit allen bestehenden mechanisch-biologischen und thermischen Verfahren, so wie Trocken- und Nassvergärungsverfahren, Perkolationsverfahren, Hydrolyseverfahren, Kompostierungsverfahren, aerobe und anaerobe Abwasserreinigungsverfahren, Membrantrennverfahren zur Kreislaufwasserreinigung, Trocknungsverfahren, Pelletierungsverfahren sowie Verbrennungsverfahren mit und ohne vorherige Trocknungvorteilhaft, eingesetzt werden. Hierbei ist auch die Nachrüstung bestehender Anlagen vorteilhaft. Der Kompostabsatz einiger Kompostierungsanlagen zur stofflichen Verwertung ist aufgrund der Schadstoffbelastung des Kompostes oder die Deponierung aufgrund von nationalen Verordnungen nicht mehr gesichert. Durch eine Nachrüstung mit dem erfindungsgemäßen Verfahren können die Schadstoffgehalte der Organikfraktionen gesenkt werden und gleichzeitig die energetische Verwertung als Biomasse durch Abscheidung der Inertstoffe und Verwendung der Kompostierung zur Trocknung der organischen Fraktionen ermöglicht werden.

Die Fraktionen Inert 1, 2 und 3 sollen vorzugsweise stofflich in der Bauindustrie verwertet werden. Für die Fraktionen Inert 2 und 3 ist eine stoffliche Verwertung bei den meisten Stoffgemischen gegeben. Die Fraktion Inert 1 erfüllt z.B. bei Siedungsabfällen ohne weitere Nachbehandlung nicht immer die Qualität zur stofflichen Verwertung und muss daher auf einer Deponie abgelagert werden. Da die Schwerstoffe eine relativ geringe biologische Aktivität aufweisen, entsprechen diese Schwerstoffe den meisten nationalen Kriterien zur Ablagerung von biologisch stabilisiertem Abfall auf Deponien. In Einzelfällen kann eine nachfolgende Stabilisierung durchgeführt werden.

Viele organische Gewerbeabfälle mit einem hohen Anteil an biologisch leichtabbaubarer Organik können oft aufgrund der Schwerstoffbelastung und organischer Gröbstoffe ohne Vorbehandlung nicht mit einfachen anaeroben Abwasserreinigungsverfahren zur Biogasproduktion behandelt werden. Mit dem erfindungsgemäßen Verfahren kann die erforderliche Vorbehandlung universell für alle derzeit bekannten organischen Gewerbeabfälle von Trester über Panseninhalte bis zu Gülle durchgeführt werden. Meist kann auf eine Mischung zur Vermeidung von Sedimentationen in Vergärungsanlagen verzichtet werden.

Die vorliegende Erfindung stellt demnach ein universelles Verfahren zur Vorbehandlung dar, das unabhängig von der Schadstoffbelastung des Abfalls, eine an die lokalen Gegebenheiten angepasste, flexible Weiterverarbeitung ermöglicht. Die Aufbereitungstiefe richtet sich nach den finanziellen und lokalen Gegebenheiten und kann modular aufgebaut sein. Die Anpassung der Anlagentechnik an die zukünftigen Qualitätsanforderungen der Fraktionen für die Verwertung und Beseitigung sowie an die zukünftige Umweltgesetzgebung sollte durch einfache Erweiterung oder Umstellung der Anlagentechnik möglich sein.

Zudem sollte im Sinn einer dezentralen Abfallwirtschaft die Anlagentechnik für möglichst viele Abfälle einsetzbar sein. Das vorliegende Verfahren sowie die vorliegende Vorrichtung eignen sich daher zur Behandlung unter anderem von Siedlungsabfall, Bioabfall, organischen Gewerbeabfällen, Gülle, Straßenkehricht, kontaminierten Böden und Reststoffen aus kommunaler und industrieller Abwasserreinigung.

Das Verfahren sowie die Durchführung des Verfahrens anhand der erfindungsgemäßen Vorrichtung werden in den nachfolgenden Zeichnungen schematisch dargestellt:
- Fig. 1: zeigt in einem Diagramm die sich verändernde Zusammensetzung eines Stoffgemisches in den einzelnen Verfahrenstufen bzw. Verfahrensschritten
- Fig. 2: zeigt ein Ablaufschema des Verfahrens im Zusammenhang mit der zur Durchführung erforderlichen Vorrichtung

Bezüglich der in Fig. 1 dargestellten Verfahrensstufen wird auf die Erläuterung weiter oben verwiesen.

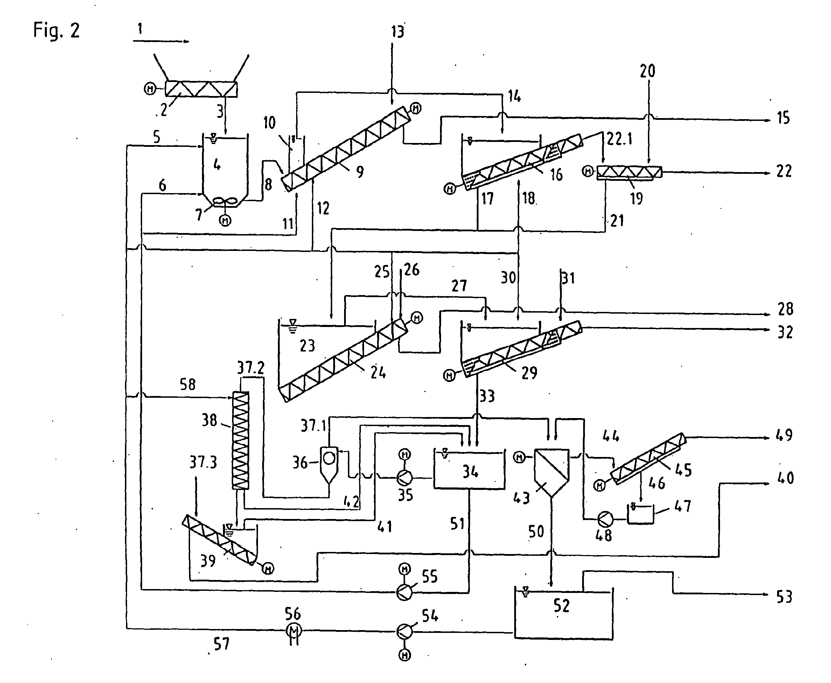

In Fig. 2 wird die Durchführung des Verfahrens beispielhaft anhand der schematisch dargestellten Vorrichtung erläutert.

Zunächst wird das zu behandelnde Stoffgemisch 1 geringfügig zerkleinert und zerfasert, wodurch eine bessere Abscheidbarkeit erreicht wird, da durch die geringe Auflösung von Faserstoffen die Viskosität des Kreislaufwassers nicht unnötig erhöht wird. Auf eine Feinzerkleinerung der Stoffgemische vor dem Eintrag in die erfindungsgemäße Vorrichtung kann im Einzelfall auch verzichtet werden, da die Vorrichtung auf eine Stückgröße bis etwa 120 mm ausgelegt ist.
Anschließend wird das Stoffgemisch 1 über einen Dosierförderer 2, vorzugsweise einem Schneckenförderer, einem Mischer 4 zugeführt. Dabei wird das Stoffgemisch bereits im Schneckenförderer mit Kreislaufwasser benetzt und am Austrag in den Mischer zur Vermeidung von Verstopfungen mit Kreislaufwasser 5, 6 gespült.

Das bereits befeuchtete Stoffgemisch 3 gelangt in den Mischer, der über einen Rührer 7 von unten angetrieben wird. Die Rührerdrehzahl und der Trockensubstanzgehalt im Mischer 4 werden über die Kreislaufwasserzufuhr in Abhängigkeit von der Stromaufnahme des Rührers und der Viskosität des Kreislaufwassers so eingestellt, dass Leichtstoffe eingemischt werden und gemeinsam mit der gesamten Suspension über einen Unterlauf den Mischer über einen Förderer 9 verlassen und die nachfolgenden Trennstufen optimiert werden. Das Einmischen der Leichtstoffe wird durch die vorherige Benetzung durch die Dosierschnecke 2 und durch eine über Strombrecher einstellbare Trombenbildung im Mischer unterstützt.

### 1. Stufe:

Von dem Mischer 4 gelangt die Suspension 8 in den Förderer 9. Der Förderer ist als Schneckenförderer mit einem Mindestdurchmesser von ca. 300 mm und einer Wendelsteigung von ca. 150 mm ausgeführt. Der Schneckentrog ist als U-Trog ausgeführt und hat oberhalb der Schnecke einen freien Querschnitt von ca. 150 mm. Der Schneckenförderer 9 ist im unteren Bereich des Mischers 4 so angeflanscht, dass die Schwerstoffe über einen Winkel von ca. 45° in die Schnecke rutschen können. Die Suspension wird über den hydraulischen Druck des Mischers in den Unterlauf gedrückt und gelangt über einen Aufstromklassierer 10 in eine Siebschnecke 16. Vor dem Erreichen des Aufstromklassierers 10 streicht die Suspension über der Schnecke 9 entlang, wobei die Schwerstoffe nicht in den Aufstromklassierer 10 mitgerissen werden, sondern über die langsam laufende Schnecke 9 abtransportiert werden. Da die absinkenden Schwerstoffe noch mit anhaftender und zurückgehaltener Organik behaftet sind, wird die Schnecke 9 im Bereich des Aufstromklassierers 10 mit Kreislaufwasser 11 aus der 2. Stufe gespült. Die über den Bereich des Aufstromklassierers 10 mit dem Schneckenförderer 9 geförderten Schwerstoffe werden nun mit dem saubereren Kreislaufwasser 12 aus der 3. Stufe nachgespült. Im Bereich oberhalb des Suspensionsstandes in der Schnecke 9 werden die Schwerstoffe mit gereinigtem Kreislaufwasser oder mit Frischwasser 13 klargespült und aus dem System als erste Inertfraktion 15 in einen Container oder an eine andere Übergabestelle abgeworfen.
Durch das vorbeschriebene kaskadenartige Spülsystem, wobei dem Auswaschungsprozess folgend immer saubereres Spülwasser eingesetzt wird, werden ein geringer Verbrauch an gereinigtem Kreislauf- bzw. Frischwasser und höhere Reststoffqualitäten erzielt.

Die über den Aufstromklassierer 10 ausgetragenen Leichtstoffe 14 werden mit einer Siebschnecke 16 bei ca. 30 mm Spaltweite gesiebt. Zur Vermeidung von Schwimmschichten wird die Suspension mit den Leichtstoffen der Siebschnecke 16 über ein geschlossenes Rohrstück zugeführt. Schwimmstoffe werden somit zwangsläufig in den Bereich der Schneckenflügel der Siebschnecke 16 unterhalb des Flüssigkeitsstandes geleitet, gefördert und gesiebt. Zur Verbesserung des Siebergebnisses wird Kreislaufwasser 18 zur Spülung der Siebschnecke 16 zugeführt. Im hinteren Teil der Siebschnecke wird eine Vorpressung der Leichtstoffe 22.1 durchgeführt, bevor die Leichtstoffe 22.1 einer Waschpresse 19 übergeben werden. In der Waschpresse werden die Leichtstoffe mit Frischwasser 20 oder gereinigtem Kreislaufwasser gespült und auf hohe Entwässerungsgrade von bis zu 60 % Trockensubstanzgehalt entwässert und als Presskuchen oder erste Organikfraktion 22 in einen Container abgeworfen oder einer entsprechenden Fördertechnik übergeben.

Die gesiebte Suspension 17 und Presswasser 21 werden ohne Pumpen in ein Absetzbecken 23 geleitet.

### 2. Stufe:

In der 2. Stufe des Trennverfahrens gelangt die Suspension 17, 21 in ein Absetzbecken 23, das wie ein Sandklassierer aufgebaut ist. Die Schwerstoffe sinken in die Austragsschnecke 24, die Leichtstoffe 27 gelangen über einen Überlauf in eine Spaltsiebschnecke 29. In der Siebschnecke werden die Leichtstoffe mit Kreislaufwasser 30 aus der 3. Stufe, mit Frischwasser 31 oder gereinigtem Kreislaufwasser gespült und auf bis zu 45 % TS entwässert. Die entwässerte zweite Organikfraktion 32 wird in einen Container abgeworfen oder einer entsprechenden Fördertechnik übergeben.

Die in der Austragsschnecke 24 abgeschiedenen Schwerstoffe werden über ein Kaskaden-Spülsystem erst mit Kreislaufwasser 25 und dann mit gereinigten Kreislaufwasser oder Frischwasser 26 von Leichtstoffen gesäubert, gespült und als zweite Inertfraktion 28 in einen Entwässerungscontainer oder eine nachfolgende Fördertechnik ausgetragen.

Die gesiebte Suspension 33 mit einer Korngröße kleiner 3 mm wird in einen Filtratbehälter 34 geleitet.

### 3. Stufe:

Aus dem Filtratbehälter der 2. Stufe wird eine pumpfähige Suspension 51 entweder über eine Kreiselpumpe 55 als Kreislaufwasser zur Spülung zurückgeführt oder über eine weitere Kreiselpumpe 35 einem Hydrozyklon 36 aufgegeben. Die über das Tauchrohr des Hydrozyklons ausgetragene Suspension 37.1 enthält noch absiebbare organische Faserstoffe und Partikel, die über ein Vibrationssieb 43 zweistufig, erst bei ca. 200 µm und dann bei ca. 50 µm gesiebt werden. Zur Verbesserung der Siebqualität kann das Sieb gespült werden. Der Siebkuchen 44, der statisch auf ca. 20 % Trockensubstanzgehalt vorentwässert ist, wird über eine Schneckenpresse 45 auf ca. 40 % Trockensubstanzgehalt nachentwässert und als Presskuchen oder dritte Organikfraktion 49 ausgetragen. Das Presswasser 46 gelangt in einen Sammelbehälter 47 und wird dann über eine Pumpe 48 wieder dem Sieb 43 zugeführt. Die gesiebte Suspension 50 gelangt über Schwerkraft in einen Filtratbehälter 52.

Die Schwerfraktion 37.2 aus dem Hydrozyklonunterlauf wird über eine Sortierspirale 38 nachgereinigt. Aufgrund der speziell einzustellenden Strömungsverhältnisse in der Sortierspirale 38 wird Kreislaufwasser 58 zugeführt. Die gereinigte Schwerfraktion wird in ein Beruhigungsbad mit Sandaustrag 39 geleitet, während die mit Organik verunreinigte Schwerfraktion 42 über den Filtratbehälter 34 der 2. Stufe wieder zum Hydrozyklon zurückgeführt wird. Das Waschwasser 41 wird ebenfalls in den Filtratbehälter 34 der 2. Stufe geleitet. Die verbleibende Schwerfraktion wird nach einer Waschung mit. Frischwasser 37.3 über eine Schnecke 39 entwässert und als dritte Inertfraktion 40 ausgeschieden.

Das Überschusswasser wird über einen Überlauf aus dem Filtratbehälter 52 der 3. Stufe als Abwasser 53 einem Kreislaufwasserreinigungssystem zugeführt, welches das Kreislaufwasser soweit reinigt, dass es wieder als Trenn- und Waschwasser einsetzbar ist.

Im Bedarfsfall kann das gesamte System über einen Wärmetauscher 56 aufgeheizt werden.

## Patentansprüche

1. Verfahren zur nassmechanischen Behandlung eines Stoffgemisches, insbesondere von Abfall jeder Art, bestehend aus Inertstoffen, Wasser sowie organischen Stoffen mit einem wasserlöslichen und biologisch umsetzbaren Anteil, wobei Wasser als Löse-, Wasch- und Trennmittel eingesetzt wird,
**dadurch gekennzeichnet,**
**dass** zunächst das Stoffgemisch in einem Mischer (4) kontinuierlich mit Wasser als Trenn- und Waschmittel gemischt wird, ohne Bestandteile des Gemisches abzuscheiden, bis ein Trockensubstanzgehalt von 15 % bis 25 % eingestellt ist, dass in einer 1. Stufe
- das Stoffgemisch aus dem Mischer (4) mit einem Förderer (9) ausgetragen wird, wobei durch die Zugabe von Wasser (11, 12) die leichten Bestandteile in einem Fest-/Flüssiggemisch mit einem Trockensubstanzgehalt von 10 % bis 20 % gelöst bleiben, während die schweren Bestandteile sich absetzen und mit dem Förderer als erste inerte Schwerfraktion (15) mit einer Korngöße von > 25 mm separiert werden,
- aus dem verbleibenden Fest-/Flüssiggemisch (14) organische Leichtstoffe einer Korngröße von 30 bis 120 mm als erste organische Leichtfraktion (22) abgesiebt, nachgewaschen und gepresst werden,
**dass** in einer 2. Stufe
- aus der verbleibenden Suspension mit einem eingestellten Trockensubstanzgehalt von 6 % bis 12 % zunächst inerte Schwerstoffe (28) einer Korngröße von 2 - 25 mm durch Schwerkraft und anschließend weitere organische Leichtstoffe (32) einer Korngröße von 3 bis 30 mm durch Siebung und Spülung abgeschieden werden;
**dass** in einer 3. Stufe
- aus der verbleibenden Suspension mit einem eingestellten Trockensubstanzgehalt von 3 % bis 8 % weitere inerte Schwerstoffe (40) einer Korngröße < 2 mm durch Zentrifugalkräfte und danach weitere organische Leichtstoffe (49) einer Korngröße von 150 µm bis 3 mm durch Siebung und Spülung abgeschieden werden.

2. Verfahren nach Anspruch 1, **dadurch gekennzeichnet, dass** in der 1. bis 3. Stufe als Löse-, Wasch- bzw. Trennmittel Frischwasser oder Kreislaufwasser bestehend aus unbehandeltem und/oder gereinigtem Filtrat bzw. Abwasser der 2. und/oder 3. Stufe eingesetzt wird.

3. Verfahren nach einem der Ansprüche 1 oder 2, **dadurch gekennzeichnet, dass** in der 1. Stufe der Austrag (8) aus dem Mischer (4) über einen Schneckenförderer (9) getrennt wird, der im oberen Bereich genügend freie Querschnittsfläche aufweist, so dass ein Teil, vornehmlich bestehend aus Leichtstoffen, oberhalb der Schnecke direkt in einen Aufstromklassierer (10) abgezogen wird und ein anderer Teil, vornehmlich bestehend aus Schwerstoffen, weiter mit Spülwasser (13) von Leichtstoffen befreit und durch den Schneckenförderer (9) ausgetragen wird, wobei vorzugsweise in der 1. Stufe die Leichtstoffe (14) über den hydraulischen Druck durch den Füllstand im Mischer (4), den Vordruck über die Spülwasserpumpen (54, 55) sowie die Frischwasserzufuhr (13) über den Aufstromklassierer (10) in die Siebung (16) ausgeschleust werden oder in der 1. Stufe die Schwerstoffe im Förderer (9) mit Filtrat der 2. Stufe (11) und gereinigtem Filtrat der 3. Stufe (12) sowie mit Frischwasser (13) kaskadenförmig gespült werden, wobei die sich absetzenden Schwerstoffe von der gelösten Organik, den Leichtstoffen und den feineren Schwerstoffen befreit werde, weiterhin vorzugsweise dergestalt, dass in der 1. Stufe zusätzlich Druckluft zum Spülen der Schwerstoffe im Förderer (9) eingesetzt wird.

4. Verfahren nach den Anspruch 3, **dadurch gekennzeichnet, dass** die in der 1. Stufe ausgetragenen inerten Schwerstoffe (15) über einen Brecher zerkleinert werden und nach der Zerkleinerung entweder dem Stoffgemisch der 2. Stufe, bei einer Zerkleinerung von kleiner 15 mm, oder dem Stoffgemisch der 3. Stufe, bei einer Zerkleinerung von kleiner 3 mm, zur weiteren Reinigung beigefügt werden, wobei vor der Zerkleinerung Metalle über einen Metallabscheider abgetrennt werden.

5. Verfahren nach einem der Ansprüche 1 bis 4, **dadurch gekennzeichnet, dass** das Filtrat (33) der 2. Stufe zunächst in einen Filtratbehälter (34) gelangt und von dort in der 3. Stufe einem Hydrozyklonen (36) zugeführt wird, mittels welchem, je nach Trockensubstanzgehalt und Viskosität des Filtrates, Schwerstoffe einer Korngröße bis zu 50 -150 µm abgeschieden werden, wobei vorzugsweise der Unterlauf (37.2) des Hydrozyklons durch eine Sortierspirale (38) unter Zugabe von Kreislaufwasser (58) klassiert und gewaschen wird, wobei die gereinigte Schwerfraktion über ein Absetzbecken mit Schneckenaustrag (39) durch Spülung mit Frischwasser (37.3) gewaschen und entwässert wird sowie die mit Organik belastete Schwerfraktion und das Waschwasser (41) in den Filtratbehälter (34) der 2. Stufe zurückgeführt wird oder der Unterlauf (37.2) des Hydrozyklons über ein Vibrationssieb mit Frischwasserspülung gewaschen und entwässert wird oder der Überlauf (37.1) des Hydrozyklons einem Vibrationssieb (43) zugeführt wird, die abgesiebten Partikel mit Frischwasser und/oder Filtrat gespült werden, der voreingedickte Filterkuchen (44) über eine Schneckenpresse (45) mechanisch entwässert wird und das Presswasser in das Vibrationssieb (43) zurückgeführt wird.

6. Verfahren nach Anspruch 5, **dadurch gekennzeichnet, dass** das Filtrat (50) aus dem Vibrationssieb (43) zur Reduzierung der Viskosität, bedingt durch die Anreicherung von gelöster Organik, vollständig oder teilweise aerob oder anaerob behandelt wird und anschließend als Kreislaufwasser dem Verfahren wieder zugeführt wird, wobei vorzugsweise das Filtrat (50) einem weiteren Filtratbehälter (52) zugeführt wird, wobei die Verweilzeit des Filtrats (50) in diesem Behälter, wie auch die Verweilzeit des Filtrats (33) der 2. Stufe in dem dem Hydrozyklonen vorgeschalteten Filtratbehälter (34) durch eine entsprechende Dimensionierung der Behälter so gewählt wird, dass eine Hydrolyse der Filtrate erfolgt und weiterhin vorzugsweise ein Teilstrom des Filtrats (53) aus dem Filtratbehälter (52) über eine anaerobe Abwasserbehandlung gereinigt wird und der gereinigte Ablauf aus der Abwasserbehandlung als Kreislaufwasser wieder im Verfahren genutzt wird, wobei durch einen niedrigen pH-Wert des Kreislaufwassers eine höhere Löslichkeit der organischen Fraktion erzielt wird.

7. Verfahren nach Anspruch 6, **dadurch gekennzeichnet, dass** das aerob oder anaerob behandelte Filtrat der 3. Stufe vor Rückführung in das Verfahren als Kreislaufwasser über Mikro-, Nanofiltrations- oder Umkehrosmosesysteme von Schadstoffen und/oder von Salzen befreit wird, wobei durch das gereinigte Kreislaufwasser die Schadstoffkonzentration des Stoffgemischs im Verfahren reduziert wird.

8. Verfahren nach einem der Ansprüche 6 oder 7, **dadurch gekennzeichnet, dass** das Kreislaufwasser (57) vor Rückführung in das Verfahren über einen Wärmetauscher (56) bis auf 30 - 85°C zur Verbesserung der Trennleistung des Gesamtsystems, des Entwässerungsgrades der Organikfraktionen, der Löslichkeit der vergärbaren Organik und der Hygienisierung der Einzelfraktionen sowie zur Einstellung der für die Vergärung von Abwasser (53) und/oder von den Leichtstofffraktionen (22, 32, 49) erforderlichen Temperatur von 35°C oder 55°C aufgewärmt wird und/oder dass für die Vergärung des Abwassers (53) sowie aller oder einzelner Leichtstofffraktionen (22, 32, 49) ein aus dem Stand der Technik bekanntes Verfahren, insbesondere das Trockenvergärungsverfahren als auch das Nassvergärungsverfahren, eingesetzt wird, wobei vorzugsweise die in der 1. bis 3. Stufe abgeschiedenen Leichtstofffraktionen (22, 32, 49) bei der Vergärung auf einen vorbestimmten Entwässerungsgrad eingestellt und einer Nachzerkleinerung unterzogen werden.

9. Verfahren nach einem der Ansprüche 1 bis 8, **dadurch gekennzeichnet, dass** die in der 1. bis 3. Stufe abgeschiedenen Leichtstofffraktionen (22, 32, 49) weitestgehend mechanisch entwässert werden und/oder für die energetische oder stoffliche Verwertung als Trockendünger thermisch oder thermisch-biologisch nachbehandelt und getrocknet werden, wobei vorzugsweise die thermisch getrockneten Leichtstofffraktionen (22, 32, 49) nach einer Pelletierung zur Verbesserung der Pflanzenverträglichkeit als Trockendüngerpellets eingesetzt werden oder die getrockneten Leichtfraktionen (22, 32, 49) als Pelletierhilfsmittel für die Pelletierung von Ersatzbrennstoffen wie Verpackungsabfällen oder aufbereitetem Siebüberlauf aus mechanisch-biologischen Aufbereitungsanlagen eingesetzt werden, wodurch gleichzeitig die Thermostabilität der Brennstoffpellets beim Einsatz in Schachtvergasungsverfahren verbessert wird.

10. Vorrichtung zur Durchführung des Verfahrens nach einem der vorgenannten Ansprüche, bestehend aus der Hintereinanderschaltung
- eines Dosierförderers (2), eines Mischers (4), eines Schneckenförderers (9), eines Aufstromklassierers (10), einer Siebeinrichtung (16) und einer Presse (19)
- in einer 1. Verfahrensstufe
- eines Absetzbeckens (23), einer Austragsschnecke (24), einer Siebeinrichtung (29) und eines Filtratbehälters (34)
- in einer 2. Verfahrensstufe
- einer Kreiselpumpe (35), eines Hydrozyklons (36), eines Vibrationssiebes (43) und einer Schneckenpresse (45) sowie, anschließend an den Hydrozyklon, einer Sortierspirale (38), eines Beruhigungsbades mit Sandaustrag (39)
- in einer 3. Verfahrensstufe.

## Claims

1. Method for the wet mechanical treatment of a mixture of materials, in particular all kinds of waste, consisting of inert materials, water as well as organic materials having a water-soluble and a bioconvertible part, wherein water is used as solvent, washing agent and separating agent,
**characterized in that**
the mixture of materials is at first continuously mixed in a mixer (4) with water as separating and washing agent, without separating off compounds of the mixture, until a dry substance content of 15 % to 25 % is adjusted,
that in a first step
- the mixture of materials is discharged from the mixer (4) by means of a conveyor (9), wherein by the addition of water (11, 12) the light components remain dissolved in a solid/liquid mixture having a dry substance content of 10% to 20%, whereas the heavy components settle and are separated by means of the conveyor as a first inert heavy fraction (15) having a grain size of > 25 mm,
- from the remaining solid/liquid mixture (14), organic light materials having a grain size of 30 to 120 mm are sieved off, post-washed and pressed as first organic light fraction (22),
that in a second step
- from the remaining suspension having an adjusted dry substance content of 6 % to 12 %, are separated out at first inert heavy materials (28) having a grain size of 2 to 25 mm by gravity and subsequently further organic light materials (32) having a grain size of 3 to 30 mm by sieving and rinsing,
that in a third step
- from the remaining suspension having an adjusted dry substance content of 3% to 8%, further inert heavy materials (40) having a grain size of < 2 mm are separated out by centrifugal forces and subsequently further organic light materials (49) having a grain size of 150 µm to 3 mm by sieving and rinsing.

2. Method according to claim 1, **characterized in that** in the first to third step fresh water or circulation water consisting of unprocessed and/or purified filtrate or respectively sewage water of the second and/or third step is used as solvent, washing agent or separating agent.

3. Method according to one of the claims 1 or 2, **characterized in that** in the first step the discharge (8) from the mixer (4) is separated by means of a screw conveyor (9) that disposes of sufficient free section area in the upper part, so that a part, principally consisting of light materials, is directly carried away into an upflow classifier (10) above the screw conveyor and that another part, principally consisting of heavy materials, is further cleaned of light materials by means of rinsing water (13) and is discharged via the screw conveyor (9), wherein preferably in the first step the light materials (14) are transferred outward into the sieving (16) via the hydraulic pressure caused by the filling level in the mixer (4), the pre-pressure via the rinsing water pumps (54, 55) as well as the fresh water supply (13) via the upflow classifier (10) or in the first step the heavy materials in the conveyor (9) are rinsed with filtrate of the second step (11) and purified filtrate of the third step (12) as well as with fresh water (13) in a cascaded manner, wherein the settling heavy materials are cleaned of the dissolved organic, the light materials and the finer heavy materials, furthermore preferably in such a way, that in the first step compressed air is additionally employed for rinsing the heavy materials in the conveyor (9).

4. Method according to claim 3, **characterized in that** the inert heavy materials (15) that have been discharged in the first step are crushed via a breaker and after the crushing are either added to the mixture of materials of the second step, in the case of a crushing to less than 15 mm, or the mixture of materials of the third step, in the case of a crushing to less than 3 mm, for further purification, wherein before the crushing metals are separated out by a metal separator.

5. Method according to one of the claims 1 to 4, **characterized in that** the filtrate (33) of the second step at first reaches a filtrate vessel (34) and therefrom is conveyed into a hydrocyclone (36) in the third step, by means of which, according to the dry substance content and viscosity of the filtrate, heavy materials of a grain size up to 50 - 150 µm are being separated out, wherein preferably the underflow (37.2) of the hydrocyclone is classified and washed by means of a sorting spiral (38) by addition of circulation water (58), wherein the purified heavy fraction is washed and dehydrated via a sedimentation basin having a screw discharge (39) by rinsing with fresh water (37.3) as well as the heavy fraction that is loaded with organic and the washing water (41) are recirculated into the filtrate vessel (34) of the second step or the underflow (37.2) of the hydrocyclone is washed and dehydrated via a vibration sieve with fresh water rinsing or the overflow (37.1) of the hydrocyclone is conveyed to a vibration sieve (43), the sieved-off particles are rinsed with fresh water and/or filtrate, the pre-thickened filtrate cake (44) is dehydrated mechanically by a screw press (45) and the press water is recirculated into the vibration sieve (43).

6. Method according to claim 5, **characterized in that** the filtrate (50) from the vibration sieve (43) is completely or partially processed in an aerobic manner or in an anaerobic manner in order to reduce the viscosity, in consequence of the enrichment of dissolved organic, and subsequently is recirculated as circulation water into the process, wherein preferably the filtrate (50) is conveyed to a further filtrate vessel (52), wherein the residence time of the filtrate (50) in this vessel as well as the residence time of the filtrate (33) of the second step in the filtrate vessel (34) that is connected upstream of the hydrocyclone by a respective dimensioning of the vessels is selected such, that a hydrolysis of the filtrates is effected and furthermore preferably that a partial stream of the filtrate (53) from the filtrate vessel (52) is purified via an anaerobic sewage treatment and the purified discharge from the sewage treatment is re-used as circulation water in the process, wherein by a low pH-value of the circulation water a higher solubility of the organic fraction is achieved.

7. Method according to claim 6, **characterized in that** the filtrate of the third step that has been processed in an aerobic or anaerobic manner is cleaned of pollutants and/or of salts before being recirculated into the process as circulation water via microfiltration, nanofiltration or reverse osmosis systems, wherein via the purified circulation water the pollutant concentration of the mixture of materials in the process is reduced.

8. Method according to one of the claims 6 or 7, **characterized in that** the circulation water (57) is heated up to 30 - 85°C before recirculation into the process via a heat exchanger (56) for improving the separation performance of the total system, the dehydration rate of the organic fraction, the solubility of the fermentable organic material and the sterilization of the individual fractions as well as for adjustment of the temperature of 35°C or 55°C that is required fort he fermentation of the sewage water (53) and/or of the light material fractions (22, 32, 49) and/or that for the fermentation of the sewage water (53) as well as of all or individual light material fractions (22, 32, 49) a method known in the prior art, in particular the dry fermentation process or also the wet fermentation process, is employed, wherein preferably the light material fractions (22, 32, 49) that have been separated out in the first to the third step during the fermentation are adjusted to a predetermined dehydration rate and are subjected to a post-crushing.

9. Method according to one of the claims 1 to 8, **characterized in that** the light material fractions (22, 32, 49) that have been separated out in the first to the third step are dehydrated principally mechanically and/or are thermally or thermally-biologically after-treated and dried for the energy utilization or utilization as material in the form of a dry fertilizer, wherein preferably the thermally dried light material fractions (22, 32, 49) are used as dry fertilizer pellets after a pelletization for the improvement of the plant tolerance or the dried light fractions (22, 32, 49) are employed as pelletization auxiliary means for the pelletization of substitute combustibles as packaging waste or reprocessed sieve overflow from mechanical-biological processing plants, whereby at the same time the thermal stability of the combustible pellets in the use in shaft gasification methods is improved.

10. Device for performing the method according to one of the aforementioned claims, consisting of the connection in series of
- a dosing conveyor (2), a mixer (4), a screw conveyor (9), an upflow classifier (10), a sieving device (16) and a press (19)
- in a first step of the method
- a sedimentation basin (23), a discharge screw (24), a sieving device (29) and a filtrate vessel (34)
- in a second step of the method
- a rotary pump (35), a hydrocyclone (36), a vibration sieve (43) and a screw press (45) as well as, upstream of the hydrocyclone, a sorting spiral (38), a calming bath with sand discharge (39)
- in a third step of the method.

## Revendications

1. Procédé de traitement par voie humide et mécanique d'un mélange de matières, en particulier de déchets de tout type, se composant de matières inertes, d'eau ainsi que de matières organiques avec une part soluble dans l'eau et bioconvertible, l'eau étant utilisée comme solvant, agent de lavage et de séparation,
**caractérisé par le fait**
**que**, d'abord, ledit mélange de matières est mélangé continûment dans un mélangeur (4) avec de l'eau comme agent de séparation et de lavage, sans séparer des composants du mélange, jusqu'à ce qu'une teneur en matière sèche comprise entre 15 % et 25 % soit réglée, que, dans une première étape,
- ledit mélange de matières est déchargé du mélangeur (4) au moyen d'un convoyeur (9), dû à l'addition d'eau (11, 12), les composants légers restant dissous dans un mélange solide/liquide ayant une teneur en matière sèche comprise entre 10 % et 20 %, tandis que les composants lourds se déposent et sont les premiers à être séparés au moyen du convoyeur comme première fraction lourde inerte (15) ayant une taille des particules de > 25 mm,
- des matières légères organiques d'une taille des particules comprise entre 30 et 120 mm sont séparées par criblage, comme première fraction légère organique (22), du mélange solide/liquide (14) restant, sont relavées et pressées,
**que**, dans une deuxième étape,
- de la suspension restante présentant une teneur réglée en matière sèche comprise entre 6 % et 12 % sont séparées d'abord par gravité des matières lourdes inertes (28) d'une taille des particules comprise entre 2 et 25 mm et sont séparées ensuite par criblage et rinçage d'autres matières légères organiques (32) ayant une taille des particules comprise entre 3 et 30 mm,
**que**, dans une troisième étape,
- de la suspension restante ayant une teneur réglée en matière sèche compris entre 3 % et 8 % sont séparées, par forces centrifuges, d'autres matières lourdes inertes (40) d'une taille des particules de < 2 mm et sont séparées ensuite, par criblage et rinçage, d'autres matières légères organiques (49) d'une taille des particules de 150 µm à 3 mm.

2. Procédé selon la revendication 1, **caractérisé par le fait que**, dans les étapes une à trois, on utilise de l'eau fraîche ou de l'eau de circulation se composant de filtrat non traité et/ou purifié, ou bien les eaux usées de la deuxième étape et/ou de la troisième étape en tant que solvant, agent de lavage ou bien de séparation

3. Procédé selon l'une des revendications 1 ou 2, **caractérisé par le fait que**, dans la première étape, les matières (8) déchargées du mélangeur (4) sont séparées par un convoyeur à vis (9) qui présente une aire libre suffisante de section dans la zone supérieure de sorte qu'une partie, constituée principalement par des matières légères, est évacuée au-dessus de la vis sans fin directement dans un classificateur à courant ascendant (10) et qu'une autre partie, constituée principalement par des matières lourdes, est libérée encore de matières légères à l'aide d'eau de rinçage (13) et est déchargée par ledit convoyeur à vis (9), de préférence, dans la première étape, les matières légères (14) étant expulsées dans le dispositif de criblage (16) par la pression hydraulique due au niveau de remplissage dans le mélangeur (4), par la pré-pression via les pompes à eau de rinçage (54, 55) ainsi que par l'admission d'eau fraîche (13) via ledit classificateur à courant ascendant (10), ou, dans la première étape, les matières lourdes dans le convoyeur (9) étant rincées en cascade avec du filtrat de la deuxième étape (11) et avec du filtrat purifié de la troisième étape (12) ainsi qu'avec de l'eau fraîche (13), les matières lourdes qui se déposent étant libérées de la matière organique dissoute, des matières légères et des matières lourdes plus fines, en outre de préférence de telle manière que l'on utilise en sus, dans la première étape, de l'air comprimé pour rincer les matières lourdes dans le convoyeur (9).

4. Procédé selon la revendication 3, **caractérisé par le fait que** les matières lourdes inertes (15) déchargées dans la première étape sont concassées au moyen d'un concasseur et sont ajoutées après le concassage soit au mélange de matières de la deuxième étape, dans le cas d'un concassage inférieur à 15 mm, soit au mélange de matières de la troisième étape, dans le cas d'un concassage inférieur à 3 mm, pour une autre purification, des métaux étant séparés par le biais d'un séparateur de métaux avant l'opération de concassage.

5. Procédé selon l'une des revendications 1 à 4, **caractérisé par le fait que** le filtrat (33) de la deuxième étape entre d'abord dans un réservoir de filtrat (34) et est amené de là, dans la troisième étape, à un hydrocyclone (36) au moyen duquel - selon la teneur en matière sèche et la viscosité du filtrat - sont séparées des matières lourdes ayant une taille des particules allant jusqu'à 50 - 150 µm, de préférence le cours inférieur (37.2) dudit hydrocyclone étant classé et lavé par une spirale de triage (38) en ajoutant de l'eau de circulation (58), la fraction lourde purifiée étant lavée via un bassin de sédimentation à vis sans fin à extraction (39) par un rinçage avec de l'eau fraîche (37.3) et étant déshydratée et la fraction lourde chargée de matière organique ainsi que l'eau de lavage (41) étant ramenées au réservoir de filtrat (34) de la deuxième étape, ou le cours inférieur (37.2) de l'hydrocyclone étant lavé via un tamis vibrant avec un rinçage à l'eau fraîche et étant déshydraté, ou le cours supérieur (37.1) dudit hydrocyclone étant amené à un tamis vibrant (43), les particules tamisées étant rincées avec de l'eau fraîche et/ou avec du filtrat, le gâteau de filtration (44) épaissi préalablement étant déshydraté mécaniquement par l'intermédiaire d'une presse à vis sans fin (45) et l'eau de presse étant ramenée dans ledit tamis vibrant (43).

6. Procédé selon la revendication 5, **caractérisé par le fait que** le filtrat (50) du tamis vibrant (43) est soumis complètement ou en partie à un traitement aérobie ou anaérobie pour réduire la viscosité, dû à l'enrichissement en matière organique dissoute, et est amenée ensuite à nouveau au processus comme eau de circulation, de préférence, ledit filtrat (50) étant amené à un autre réservoir de filtrat (52), le temps de séjour du filtrat (50) dans ce réservoir - comme également le temps de séjour du filtrat (33) de la deuxième étape dans le réservoir de filtrat (34) placé en amont dudit hydrocyclone - étant choisi par un dimensionnement correspondant des réservoirs de telle manière qu'une hydrolyse des filtrats a lieu, et que, en outre de préférence, un courant partiel du filtrat (53) du réservoir de filtrat (52) est purifié par un traitement anaérobie des eaux usées et l'eau purifiée résultant du traitement des eaux usées est utilisée à nouveau comme eau de circulation dans le processus, une plus grande solubilité de la fraction organique étant atteinte par une plus faible valeur pH de l'eau de circulation.

7. Procédé selon la revendication 6, **caractérisé par le fait que**, avant d'être recyclé comme eau de circulation dans le processus, le filtrat de la troisième étape traité de façon aérobie ou anaérobie est-libéré de polluants et/ou de sels au moyen de systèmes de microfiltration, de nanofiltration ou d'osmose inverse, la concentration en polluants du mélange de matières dans le processus étant réduite par l'eau purifiée de circulation.

8. Procédé selon l'une des revendications 6 ou 7, **caractérisé par le fait que**, avant d'être recyclée dans le processus, l'eau de circulation (57) est chauffée au moyen d'un échangeur de chaleur (56) à une température comprise entre 30 et 85 °C pour améliorer la puissance de séparation de l'ensemble du système, le taux de déshydratation des fractions organiques, la solubilité de la matière organique fermentable et l'hygiénisation des fractions individuelles ainsi que pour régler la température de 35°C ou de 55°C nécessaire à la fermentation des eaux usées (53) et/ou des fractions de matières légères (22, 32, 49), et/ou que, pour la fermentation des eaux usées (53) ainsi que de toutes les fractions de matières légères (22, 32, 49) ou de quelques-unes de celles-ci, on met en oeuvre un procédé connu de l'art antérieur, en particulier le procédé de fermentation sèche mais aussi le procédé de fermentation humide, de préférence les fractions de matières légères (22, 32, 49) qui ont été séparées dans les étapes une à trois étant réglées lors de la fermentation à un taux prédéterminé de déshydratation et étant soumises à un concassage ultérieur.

9. Procédé selon l'une des revendications 1 à 8, **caractérisé par le fait que** les fractions de matières légères (22, 32, 49) qui ont été séparées dans les étapes une à trois sont déshydratées le plus possible mécaniquement et/ou sont traitées ultérieurement de manière thermique ou thermo-biologique et séchées pour une utilisation énergétique ou matérielle comme engrais sec, de préférence les fractions de matières légères (22, 32, 49) séchées de façon thermique étant utilisées, après une pelletisation, en tant que pellets d'engrais sec pour améliorer la compatibilité vis-à-vis des plantes, ou les fractions légères séchées (22, 32, 49) étant mises en oeuvre comme auxiliaire de pelletisation pour la pelletisation de combustibles de remplacement, tels que déchets d'emballage ou refus traité de criblage provenant d'installations de préparation mécano-biologique, en même temps la stabilité thermique des pellets de combustible lors de l'utilisation dans des procédés de gazéification dans le puits étant ainsi améliorée.

10. Dispositif pour la mise en oeuvre du procédé selon l'une des revendications susmentionnées, se composant du montage en série
- d'un convoyeur de dosage (2), d'un mélangeur (4), d'un convoyeur à vis (9), d'un classificateur à courant ascendant (10), d'un dispositif de criblage (16) et d'une presse (19)
- dans une première étape du procédé
- d'un bassin de sédimentation (23), d'une vis sans fin de décharge (24), d'un dispositif de criblage (29) et d'un réservoir de filtrat (34)
- dans une deuxième étape du procédé
- d'une pompe centrifuge (35), d'un hydrocyclone (36), d'un tamis vibrant (43) et d'une presse à vis sans fin (45) ainsi que, à la suite de l'hydrocyclone, d'une spirale de triage (38), d'un bain calmant avec un dispositif de décharge de sable (39)
- dans une troisième étape du procédé.
